# EUROPÄISCHE PATENTSCHRIFT

(11) **EP 4 001 873 B1**
(45) Veröffentlichungstag und Bekanntmachung des Hinweises auf die Patenterteilung: **20.08.2025**
(21) Anmeldenummer: 21208211.9
(22) Anmeldetag: 15.11.2021
(51) Int. Cl.: G01L 1/12, G01L 5/00, G01M 5/00, G01B 7/24, G01L 5/10

(54) **SENSOREINHEIT FÜR FLEXIBLE MATERIALSCHICHTEN**
SENSOR UNIT FOR FLEXIBLE MATERIAL LAYERS
UNITÉ DE CAPTEUR POUR COUCHES DE MATIÈRE SOUPLE

(30) Priorität: 16.11.2020 DE 102020130240
(43) Veröffentlichungstag der Anmeldung: 25.05.2022
(73) Patentinhaber: 3e oem sports AG, 82402 Seeshaupt (DE)
(72) Erfinder: Slomak, Bartosch, 85630 Grasbrunn (DE); Felsch, Florian, 82541 Münsing (DE)
(74) Vertreter: WSL Patentanwälte Partnerschaft mbB

(56) Entgegenhaltungen:
- DE-A1- 19 800 255
- DE-B3- 102014 111 869
- DE-U1- 202007 018 165
- US-A1- 2013 091 962
- US-A1- 2016 317 083
- US-A1- 2017 322 097

## Beschreibung

Die vorliegende Erfindung betrifft eine Sensoreinheit zur Erfassung der Dehnung einer flexiblen, bahn- oder bandförmigen Materialschicht. Die vorliegende Erfindung betrifft außerdem ein Verfahren zur Erfassung der Dehnung einer flexiblen, bahn- oder bandförmigen Materialschicht.

Flexible Materialschichten können durch eine Vielzahl verschiedener Eigenschaften beschrieben werden. Eine dieser Eigenschaften ist die Dehnung. Bei der Dehnung eines Materials handelt es sich um eine relative Längenänderung, d.h. Verlängerung (positive Dehnung) oder Verkürzung (negative Dehnung/ Stauchung), eines Materials unter Belastung. Diese Belastung kann beispielsweise durch von außen auf das Material einwirkende Kräfte oder aufgrund von Temperaturänderungen erzeugt werden. Die Erfassung der Dehnung einer flexiblen Materialschicht ist in vielen verschiedenen Anwendungsfällen von Bedeutung oder kann für weitergehende Auswertungen der Materialeigenschaften verwendet werden.

Insbesondere kann aus der Dehnung einer Materialschicht auf die Kräfte geschlossen werden, die in einem bestimmten Moment auf die Materialschicht wirken. Die so erfassbaren Kräfte wiederum können hilfreich für eine Auswertung sein, die beispielsweise die Evaluation der Belastung eines Materials zum Ziel hat.

Um die Dehnung eines Materials zu vermessen, sind aus dem Stand der Technik verschiedene Verfahren bekannt. Beispiele hierfür finden sich in der US 2017/322097 A1, der DE 10 2014 111869 B3, der DE 20 2007 018165 U1, der DE 198 00 255 A1, der US 2013/091962 A1 oder der US2016/317083A1. Häufig erfolgt die Bestimmung der Dehnung eines Materials indirekt mithilfe von Wegsensoren. Hierbei wird beispielsweise eine Widerstands-, eine Induktions- oder eine Kapazitätsänderung in einem elektronischen System detektiert. Bei elektronischen Dehnungsmessstreifen wird beispielsweise eine Widerstandsänderung einer dünnen Messgitterfolie aus Widerstandsdraht detektiert, die auf einem dünnen Kunststoffträger aufgebracht ist. Diese Dehnungsmessstreifen werden direkt auf die zu untersuchende Materialschicht aufgeklebt. Bereits bei kleinsten Dehnungen ändert sich der elektrische Widerstand der Messstreifen, sodass die Dehnung unmittelbar erfasst werden kann.

Solche elektronischen Dehnungsmessstreifen haben allerdings den Nachteil, dass sie auf jedem Objekt, das untersucht werden soll, aufgebracht werden müssen. Zudem muss sichergestellt werden, dass die Klebeverbindung zwischen Dehnungsmessstreifen und zu untersuchenden Material ausreichend stabil ist, um den Belastungen während der Dehnung des Materials Stand zu halten. Löst sich hingegen der Dehnungsmessstreifen vom Material, kann die Dehnung nicht mehr korrekt erfasst werden.

Alternativ sind auch Dehnungssensoren bekannt, die die Längenänderung des Materials optisch erfassen, beispielsweise auf Basis einer Bildkorrelation von Oberflächenmustern. Hierbei wird die Bewegung eines Musters an bestimmten Messstellen beobachtet und so auf die Dehnung eines Materials geschlossen. Diese Messverfahren erfordern jedoch eine genaue Ausrichtung des Materials zu der Messvorrichtung. Zudem sind solche Messvorrichtungen, die häufig auf Lasermessverfahren oder aufwendiger Kameratechnik basieren, teuer und komplex.

Das der Erfindung zugrunde liegende Problem besteht daher darin, eine Sensoreinheit und ein Verfahren zur Erfassung der Dehnung einer flexiblen Materialschicht bereitzustellen, mit welcher die Dehnung einer flexiblen Materialschicht kostengünstig und zuverlässig erfasst werden kann.

Erfindungsgemäß wird dieses Problem durch eine Sensoreinheit der eingangs genannten Art gelöst, wobei die Sensoreinheit einen Messmagneten aufweist, wobei der Messmagnet ein Befestigungsmittel aufweist, mit welchem der Messmagnet an der Materialschicht an einer festgelegten Position befestigbar ist, und eine Sensorplatte aufweist, wobei die Sensorplatte eine Messeinrichtung zur Erfassung eines die magnetische Flussdichte eines Magnetfeldes des Messmagneten repräsentierenden Parameters aufweist, wobei die Sensorplatte weiterhin ein Befestigungsmittel aufweist, mit welchem die Sensorplatte an der Materialschicht an einer festgelegten Position befestigbar ist, und eine Auswerteeinheit aufweist zur Ermittlung der Dehnung der Materialschicht auf Basis des von der Sensorplatte erfassten Parameters, wobei die Messeinrichtung und der Messmagnet in einem Abstand zueinander angeordnet sind, in dem die magnetische Flussdichte des Magnetfeldes des Messmagneten durch die Messeinrichtung erfassbar ist, wobei die Messeinrichtung und der Messmagnet in einer Materialschichtebene durch die Dehnung der Materialschicht in Richtung der Bahn oder des Bandes relativ zueinander bewegbar sind, sodass ein Abstand des Messmagneten zu der Messeinrichtung von der Dehnung der Materialschicht in Richtung der Bahn oder des Bandes abhängt, wobei der von der Messeinrichtung erfasste Parameter von dem Abstand der Messeinrichtung und dem Messmagneten und damit von der Dehnung der Materialschicht in Richtung der Bahn oder des Bandes abhängt.

Die erfindungsgemäße Sensoreinheit dient zur Erfassung der Dehnung einer flexiblen Materialschicht. Unter einer Materialschicht wird im Sinne der vorliegenden Erfindung ein flaches Objekt verstanden, welches in einer Raumrichtung eine deutlich geringere Ausdehnung (vorzugsweise jeweils > Faktor 5 Unterschied) aufweist als in den beiden anderen Raumrichtungen.

Eine Materialschicht ist im Sinne der vorliegenden Erfindung dann "flexibel", wenn die Materialschicht durch eine Kraft, die bei bestimmungsgemäßer Verwendung eines wenigstens abschnittsweise aus der Materialschicht bestehenden Produktes auf die Materialschicht einwirkt, in mehr als nur einer Richtung reversibel verformbar ist. "Reversibel" bedeutet dabei, dass die Materialschicht, ohne dass eine Beschädigung durch die auf sie einwirkende Kraft erfolgt ist, durch eine Kraft in derselben Größenordnung wieder in die Ausgangsform vor der Krafteinwirkung gebracht werden kann. Eine Materialschicht ist im Sinne der Erfindung insbesondere dann flexibel, wenn sie durch die Erdanziehungskraft und/oder die Muskelkraft eines Menschen reversibel verformbar ist.

Die erfindungsgemäße Sensoreinheit kommt zur Erfassung der Dehnung von bahn- oder bandförmigen Materialschichten zum Einsatz. In diesem Fall ist die Ausdehnung der Materialschicht in einer Raumrichtung der Bahn oder des Bandes nochmals deutlich größer als die Ausdehnung in einer Raumrichtung senkrecht dazu (vorzugsweise > Faktor 10 größer). Erfasst wird in diesem Fall insbesondere die Dehnung der Materialschicht in Richtung der Bahn oder des Bandes.

Bei bestimmten Ausführungsformen handelt es sich bei der Materialschicht um eine Schicht, die aus einem Material besteht, dass unter dehnbaren Kunststoffbahnen, Folien, Textilgeweben und Kombinationen hiervon ausgewählt ist. Bei besonderen Ausführungsformen handelt es sich bei der Materialschicht um ein dehnbares Fitnessband, einen Stoffabschnitt einer Sportbekleidung, eine Schicht einer orthopädischen Bandage oder eines medizinischen Verbandes oder um einen Bezug eines Sportgeräts handelt.

Bei den Ausführungsformen, bei denen die Sensoreinheit die Dehnung eines Fitnessbandes erfasst, kann anhand der daraus ermittelten Dehnungsdaten dem Nutzer des Fitnessbandes vorzugsweise in Echtzeit eine Rückmeldung darüber bereitgestellt werden, wie viel Kraft während dem Training aufgewendet wird. So können Sportübungen gezielter ausgeführt und damit der Trainingserfolg erhöht werden.

Mit der vorliegenden Erfindung kann jedoch nicht nur die Dehnung von Fitnessbändern ermittelt werden, sondern auch die Dehnung jeder anderen dehnbaren Materialschicht, wie z.B. die Dehnung eines Stoffgewebes. Bei bestimmten Ausführungsformen der Erfindung ist wenigstens eine erfindungsgemäße Sensoreinheit an einem Stoffabschnitt einer Sportbekleidung angebracht, um die Bewegungen eines Gelenks während der Ausübung einer Sportart zu vermessen. Sind mehrere Sensoreinheiten an mehreren Stoffabschnitten einer Sportbekleidung angebracht, könnte jedes Gelenk am menschlichen Körper in seinem Bewegungsradius vermessen werden und somit ein Bewegungsprofil des Trägers der Sportbekleidung ermittelt werden.

Alternativ kann die erfindungsgemäße Sensoreinheit auch Informationen darüber bereitstellen, wie dehnbar ein Gewebe noch ist. Insbesondere bei Kunststoffen führt die Materialermüdung mit der Zeit dazu, dass eine Materialschicht nach einer Belastung immer weniger in den ursprüngliche Zustand zurückfindet. Die Dehnbarkeit der Materialschicht nimmt entsprechend ab. Überwacht man die Dehnbarkeit einer solchen Materialschicht mit der erfindungsgemäßen Sensoreinheit, kann unter Umständen auch basierend auf Erfahrungswerten ein Zeitpunkt ermittelt werden, an welchem mit einem Ermüdungsbruch des Materials zu rechnen ist. So können beispielsweise Unfälle bei Sportgeräten oder längere Ausfallzeiten bei Maschinen vermieden werden, wenn die Materialschicht vor dem Ermüdungsbruch ausgetauscht wird.

Damit die Dehnung der flexiblen Materialschicht erfasst werden kann, ist erfindungsgemäß vorgesehen, dass die Sensoreinheit im Wesentlichen zwei Teile aufweist. Ein Teil der Sensoreinheit weist den Messmagneten auf, ein anderer Teil der Sensoreinheit eine Sensorplatte mit einer Messeinrichtung zur Erfassung des Messmagneten. Diese beiden Teile werden jeweils separat an der flexiblen Materialschicht an einer festgelegten Position befestigt. D.h. nachdem die Teile befestigt wurden, können diese sich nicht mehr relativ zu der Materialschicht bewegen.

Es versteht sich, dass auch die Messeinrichtung fest auf der Sensorplatte befestigt ist. Durch die separate Befestigung der Teile durch entsprechende Befestigungsmittel wird jedoch eine Bewegung der Teile relativ zueinander ermöglicht, wenn sich die flexible Materialschicht dehnt, d.h. wenn eine Belastung auf die Materialschicht wirkt. Mit anderen Worten erfolgt eine Bewegung des Messmagneten relativ zu der Messeinrichtung nur dann, wenn die flexible Materialschicht gedehnt wird. Die Bewegung des Messmagneten relativ zu der Messeinrichtung erfolgt damit auch immer in Richtung der Dehnungsrichtung und in einer Materialschichtebene bzw. in einer Ebene parallel zu der Materialschichtebene.

In einer Ausführungsform weist der Messmagnet eine axiale oder radiale Magnetisierung auf. Dies bietet den Vorteil, dass die Sensoreinheit auch zuverlässig arbeitet, wenn die Materialschicht relativ zu der Dehnungsrichtung verdreht wird. Besonders bevorzugt ist der Messmagnet ein Neodym-Scheibenmagnet mit einer axialen Magnetisierung.

Damit die Messung der Dehnung einwandfrei funktioniert, ist es besonders vorteilhaft, wenn die Sensoreinheit möglichst wenig Einfluss auf die Dehnung der Materialschicht nimmt. In einer Ausführungsform sind die Befestigungsmittel der Sensorplatte und des Messmagneten daher so ausgeführt, dass eine punktuelle Befestigung des Messmagneten und der Sensorplatte an der Materialschicht an Befestigungspunkten bewirkt wird, sodass die Materialschicht außerhalb der Befestigungspunkte während einer Dehnung frei gleiten kann, wobei vorzugsweise die Dehnung der Materialschicht durch die Befestigungsmittel nicht beeinflusst wird.

Handelt es sich beispielsweise bei der Materialschicht um ein Gewebe, so können die Befestigungsmittel in Form von Nadeln oder Zentrierstiften ausgeführt sein, die jeweils nur eine Gewebewabe oder mehrere benachbarte Gewebewaben durchdringen, nicht aber die Fasern des Gewebes beeinflussen oder beschädigen. Gleichzeitig müssen die Befestigungsmittel jedoch auch dazu geeignet sein, die Sensorplatte und den Messmagneten an der festgelegten Stelle an der Materialschicht zu befestigen. Bei bestimmten Ausführungsformen sind zu diesem Zweck Nadeln oder Zentrierstifte an der Sensorplatte und dem Messmagneten befestigt und auf einer der Sensoreinheit abgewandten Seite der Materialschicht mit Steckern in Eingriff gebracht, die ein spontanes Lösen der Verbindung zwischen Sensoreinheit und Materialschicht verhindern.

Um den relativen Abstand zwischen den beiden Teilen der Sensoreinheit und damit die Dehnung der Materialschicht zu erfassen, ist erfindungsgemäß eine Messeinrichtung auf der Sensorplatte vorgesehen, die einen Parameter des magnetischen Feldes des Messmagneten erfasst. Der Parameter repräsentiert insbesondere die magnetische Flussdichte des Magnetfeldes. Es versteht sich jedoch, dass auch jeder andere Parameter eines Magnetfeldes geeignet ist, sofern daraus auf den Abstand zwischen Messmagnet und Messeinrichtung geschlossen werden kann.

In einer Ausführungsform ist die Messeinrichtung ein Hallsensor, wobei der erfasste Parameter eine Spannung oder ein Strom ist. Bei einem Hallsensor handelt es sich üblicherweise um ein Halbleiterelement, welches von einem Strom durchflossen wird. Wird dieses Halbleiterelement in einem Magnetfeld platziert, werden die bewegten Ladungsträger im Halbleiterelement aufgrund der im Magnetfeld wirkenden Lorentzkraft beeinflusst und es kommt zu einer Ladungsträgerseparation. Durch die Ladungsträgerseparation entsteht wiederum ein elektrisches Feld, das der Lorentzkraft entgegenwirkt. Eine Spannung, die aufgrund des elektrischen Feldes in dem Halbleiterelement entsteht, kann dann wiederum gemessen werden. Diese Spannung repräsentiert unmittelbar die magnetische Flussstärke des Magnetfeldes.

In einer weiteren Ausführungsform weisen die Befestigungsmittel der Sensorplatte zwei auf der Sensorplatte angeordnete Positionsmagnete und zwei korrespondierende Gegenmagnete auf, wobei die Messeinrichtung derart angeordnet ist, dass die Messeinrichtung zu jedem der Positionsmagnete den gleichen Abstand aufweist, wobei der von der Messeinrichtung erfasste Parameter von einem Abstand des Messmagneten senkrecht zu einer Verbindungslinie der Positionsmagnete abhängt.

Die Positionsmagnete, die fest auf der Sensorplatte angeordnet sind, dienen zusammen mit den korrespondieren Gegenmagneten einerseits der Befestigung der Sensorplatte an der flexiblen Materialschicht, indem die Materialschicht zwischen den Positionsmagneten und den Gegenmagneten eingeklemmt wird. Darüber hinaus kann ein Zentrierstift vorgesehen sein, der an den Positionsmagneten oder den Gegenmagneten angeordnet ist, die Materialschicht an der festgelegten Position durchdringt und in eine Öffnung des jeweils gegenüberliegenden Gegenmagneten oder Positionsmagneten eingreift, um die Positionsmagnete und damit die Sensorplatte und die Messeinrichtung an der Materialschicht zu befestigen.

Andererseits ermöglichen die Positionsmagnete die Definition einer Referenzlinie, zu welcher der Abstand des Messmagneten ermittelt wird. Dabei werden die Positionsmagnete derart auf der flexiblen Materialschicht angeordnet, dass die Dehnungsrichtung der Materialschicht und damit der Abstand des Messmagneten zu der Messeinrichtung immer in einer Richtung senkrecht zu der Verbindungslinie der Positionsmagnete erfasst wird.

Die Positionsmagnete bilden damit feste Bezugspunkte, die unabhängig von der Materialschicht in der Sensoreinheit festgelegt sind. Die Fixierung der Sensorplatte über die zwei Positionsmagnete an der flexiblen Materialschicht erlaubt daher die Übertragbarkeit der Messdaten auf verschiedene Materialschichten mit dem gleichen Herstellmuster, ohne dass eine individuelle Kalibrierung für das jeweilige Material erforderlich wäre.

Um also eine wiederholgenaue Messungen der Dehnung der Materialschicht zu ermöglichen, ist es essenziell, dass sich die Messpunkte relativ zu der Materialschicht nicht verschieben.

Die Bewegung der Teile der Sensoreinheit erfolgt lediglich über die Dehnung der Materialschicht.

In einer weiteren Ausführungsform der Erfindung weist wenigstens der Messmagnet und vorzugsweise auch die Positionsmagnete einen kreis- oder ringförmigen Querschnitt auf, wobei besonders bevorzugt die Befestigungsmittel im Mittelpunkt des kreis- oder ringförmigen Querschnitts angeordnet sind.

Dies bietet den Vorteil, dass der Messmagnet und die Positionsmagnete an einer festgelegten Position an der Materialschicht befestigbar sind und dass die Positionsmagnete relativ zu der Messeinrichtung symmetrisch angeordnet werden können. Letzteres ist von Bedeutung, damit die Positionsmagnete die Messeinrichtung bei der Messung des Magnetfeldes des Messmagneten nicht beeinflussen. Die Positionsmagnete müssen daher so angeordnet werden, dass sich ihre magnetischen Kräfte aufheben. Durch die punktgenaue Positionierung der Sensorplatte und des Messmagneten durch die Positionsmagnete wird damit die Messgenauigkeit der erfindungsgemäßen Sensoreinheit erhöht.

Zudem bietet ein kreisförmiger Messmagnet den Vorteil, dass auch bei einer Verdrehung des Magneten relativ zu der Messeinrichtung, keine Beeinflussung der Messgenauigkeit erfolgt.

In einer weiteren Ausführungsform weist die Sensorplatte an einer dem Messmagneten zugewandten Seite eine Ausnehmung auf, wobei der Messmagnet zumindest teilweise in der Ausnehmung anordenbar ist. Der Messmagnet befindet sich also immer dann in der Ausnehmung der Sensorplatte, wenn gerade keine oder nur wenig positive Dehnung auf die flexible Materialschicht ausgeübt wird. Mit zunehmender positiver Dehnung der flexiblen Materialschicht bewegt sich der Messmagnet aus der Ausnehmung der Sensorplatte heraus und der Abstand zwischen Messeinrichtung und Messmagnet vergrößert sich. Die Ausnehmung bietet den Vorteil, dass der Messmagnet leichter in der korrekten Position relativ zu der Messeinrichtung angeordnet werden kann. Dies ist insbesondere bei Anwendungen von Vorteil, bei welchem der Anwender selbst die Sensoreinheit positioniert. Dies könnte z.B. bei der Anwendung an einem Fitnessband der Fall sein, wenn der Anwender den Bereich, in dem die Dehnung erfasst werden soll, selbsttätig auswählen und verändern will.

In einer weiteren Ausführungsform ist die Sensorplatte aus einem flexiblen, nicht dehnbaren Material gefertigt, sodass sich die Sensorplatte der Biegung aber nicht der Dehnung der Materialschicht anpasst. Wie auch bei den Befestigungsmitteln kommt es darauf an, dass auch die Sensorplatte die Dehnung der Materialschicht möglichst wenig beeinflusst. Gleichzeitig erhöht eine biegbare Sensorplatte jedoch die Stabilität der Verbindung der Sensorplatte mit der flexiblen Materialschicht. Außerdem erhöht sich der Tragekomfort, wenn die erfindungsgemäße Sensoreinheit beispielsweise an einer Sportbekleidung befestigt ist.

In Hinblick auf die Flexibilität und Anpassbarkeit der Sensoreinheit an die Form der Materialschicht beträgt in einer Ausführungsform die Dicke der Sensoreinheit senkrecht zur Materialschicht höchstens 1 cm (ohne dazwischenliegende Materialschicht), bevorzugt höchstens 5 mm (ohne dazwischenliegende Materialschicht). Um dennoch eine ausreichende Stabilität der Sensoreinheit zu gewährleisten beträgt die Dicke der Sensoreinheit ohne Materialschicht mindestens 2 mm, vorzugsweise 3 mm.

Die Länge der Sensoreinheit parallel zur Richtung der Dehnung beträgt in einer Ausführungsform mindestens 20 mm, vorzugsweise mindestens 45 mm und höchstens 60 mm. Die Breite der Sensoreinheit ist vorzugsweise an die Breite der Materialschicht angepasst und beträgt in einer Ausführungsform 30 mm, was beispielsweise der Standardbreite eines schmalen Fitnessbandes entspricht.

In einer weiteren Ausführungsform ist weiterhin eine Gegenplatte zu der Sensorplatte und ein Gegenstück zu dem Messmagneten vorgesehen, wobei die Materialschicht zwischen der Sensorplatte und der Gegenplatte und dem Messmagneten und dem Gegenstück anordenbar ist, wobei die Gegenplatte und das Gegenstück zu den Befestigungsmitteln der Sensorplatte und des Messmagneten korrespondierende Befestigungsmittel aufweisen, sodass die Gegenplatte mit der Sensorplatte und das Gegenstück mit dem Messmagneten insbesondere mittels einer Steckverbindung, beispielsweise mittels der zuvor beschriebenen Zentrierstifte, verbindbar sind, wobei vorzugsweise die Befestigungsmittel der Gegenplatte und des Gegenstücks magnetisch ausgeführt sind, sodass die Gegenplatte und das Gegenstück zusätzlich durch eine magnetische Verbindung an der Sensorplatte und dem Messmagneten gehalten werden.

Durch die Gegenplatte und das Gegenstück kann die Sensoreinheit besonders effektiv an der Materialschicht befestigt werden. Eine möglichst dünne Steckverbindung zwischen den jeweiligen Bestandteilen sorgt dafür, dass die Dehnung der Materialschicht möglichst wenig durch die Befestigungsmittel beeinflusst wird. Zudem ist Stärke der magnetischen Verbindung zwischen den Bestandteilen so gewählt, dass eine Dehnung des Materials nach wie vor nicht behindert wird.

Besonders bevorzugt sind die Positionsmagnete, der Messmagnet und die jeweiligen Gegenteile als ringförmiger Magnet ausgeführt. Durch die beidseitige Nutzung von ringförmigen Magneten wird die Positionsgenauigkeit der Sensoreinheit nochmals verbessert, da zwei ringförmige Magnete, die miteinander in Wechselwirkung treten, dazu neigen, sich gegenseitig zu zentrieren, sodass ein Verrutschen der Magnete verhindert wird, selbst wenn die Materialschicht beispielsweise Vibrationen ausgesetzt ist.

In einer weiteren Ausführungsform sind zusätzlich zu dem Befestigungsmittel Haltemagnete auf der Sensorplatte vorgesehen, wobei die Haltemagnete mit gegenüberliegenden, auf der Gegenplatte angeordneten Haltemagneten in Wechselwirkung treten. Diese Haltemagnete führen zu einer zusätzlichen Befestigung der Sensorplatte an der Gegenplatte. Dies ist insbesondere von Vorteil, wenn die Sensorplatte neben der Messeinrichtung und den Positionsmagneten weitere elektronische Bauteile beinhaltet, die zusätzlich zu den Positionsmagneten und der Messeinrichtung Platz benötigen und daher nicht alleine von den Positionsmagneten, an welchen die Befestigungsmittel angeordnet sind, nah an der Materialschicht gehalten werden können.

In einer weiteren Ausführungsform weist die Sensoreinheit weiterhin eine Übertragungseinheit auf, die so eingerichtet ist, dass sie während des bestimmungsgemäßen Gebrauchs der Sensoreinheit zur vorzugsweise kabellosen Übertragung eines Signals, das dem von der Messeinrichtung erfassten Parameter entspricht, an eine Auswerteeinheit geeignet ist. Dies bietet den Vorteil, dass Daten, die von der Messeinrichtung erfasst werden, unmittelbar beispielsweise an ein Endgerät eines Nutzers übertragen werden können. So erhält der Nutzer eines Fitnessbandes unmittelbar ein Feedback über die aufgewendete Kraft während einer Trainingseinheit. Gerade durchgeführte Übungen können in Echtzeit an die optimalen Krafterfordernisse angepasst werden.

In einer weiteren Ausführungsform ist die Auswerteeinheit daher derart eingerichtet, dass mit dieser die für die Dehnung aufgewandte Kraft aus dem übertragenen Signal ermittelt werden kann.

In einer weiteren Ausführungsform weist die Sensoreinheit weiterhin einen Lage-, Temperatur- und/oder Beschleunigungssensor auf. Somit kann zusätzlich zu der aufgewandten Kraft noch die Lage oder Beschleunigung während eines Trainings erfasst werden. Dies bietet auch den Vorteil, dass z.B. im Falle des Fitnessbandes unterschieden werden kann, welche Art von Bewegungen gerade durchgeführt wird. Handelt es sich beispielsweise nur um dem Transport des Bandes, treten andere Beschleunigungen als im Trainingsmodus auf.

In einer weiteren Ausführungsform weist die Sensoreinheit weiterhin Bedienelemente zum Ein- und Ausschalten der Messeinrichtung auf. Dies bietet den Vorteil, dass, wenn die Messeinrichtung nicht verwendet wird, diese abgeschaltet werden kann und somit die Akkulaufzeit der Sensoreinheit vergrößert wird. Es ist jedoch auch denkbar, dass in einer alternativen Ausführungsform die Messeinrichtung nach einer bestimmten Zeit automatisch ausgeschaltet wird, wenn z.B. keine Dehnung der Materialschicht mehr erfasst wird.

Darüber hinaus wird das der Erfindung zugrunde liegende Problem auch durch ein Verfahren zur Erfassung der Dehnung einer flexiblen, bahn- oder bandförmigen Materialschicht gelöst, wobei das Verfahren die folgenden Schritte aufweist:
A) Befestigen einer Sensorplatte mit einer Messeinrichtung an der Materialschicht,
B) Befestigen eines Messmagneten an der Materialschicht, wobei die Messeinrichtung und der Messmagnet in einer Materialebene in Richtung der Dehnung der Materialschicht in Richtung der Bahn oder des Bandes relativ zueinander bewegbar sind, sodass ein Abstand des Messmagneten zu der Messeinrichtung von der Dehnung der Materialschicht in Richtung der Bahn oder Bandes abhängt,
C) Erfassen eines die magnetische Flussdichte eines Magnetfeldes des Messmagneten repräsentierenden Parameters in Abhängigkeit von dem Abstand des Messmagneten zu der Messeinrichtung,
D) Ermitteln der Dehnung der Materialschicht in Richtung der Bahn oder des Bandes auf Basis des in Schritt C) erfassten Parameters.

Weitere Vorteile, Merkmale und Anwendungsmöglichkeiten der vorliegenden Erfindung werden anhand der folgenden Beschreibung einer Ausführungsform und der dazugehörigen Figuren deutlich. In den Figuren sind gleiche Elemente mit gleichen Bezugszeichen bezeichnet.
- Figur 1: zeigt eine schematische Darstellung einer Ausführungsform der erfindungsgemäßen Sensoreinheit auf einer flexiblen Materialschicht mit geöffneter Abdeckung.
- Figur 2a: zeigt eine Draufsicht einer Ausführungsform der erfindungsgemäßen Sensoreinheit während die Materialschicht nicht gedehnt wird.
- Figur 2b: zeigt die in Figur 2a gezeigte Ausführungsform während einer Dehnung der Materialschicht.
- Figur 3a: zeigt eine dreidimensionale Darstellung der Sensorplatte und der Befestigungsmittel einer Ausführungsform der erfindungsgemäßen Sensoreinheit während die Materialschicht nicht gedehnt wird.
- Figur 3b: zeigt die in Figur 3a gezeigte Ausführungsform während einer Dehnung der Materialschicht.
- Figur 4: zeigt eine schematische Darstellung einer Ausführungsform der erfindungsgemäßen Sensoreinheit mit einer Sensorplatte, einem Messmagneten sowie entsprechenden Gegenteilen.
- Figur 5a: zeigt die in Figur 4 dargestellte Ausführungsform angeordnet auf einer Materialschicht während die Materialschicht nicht gedehnt wird.
- Figur 5b: zeigt die in Figur 4 gezeigte Ausführungsform auf einer Materialschicht, während einer Dehnung der Materialschicht.

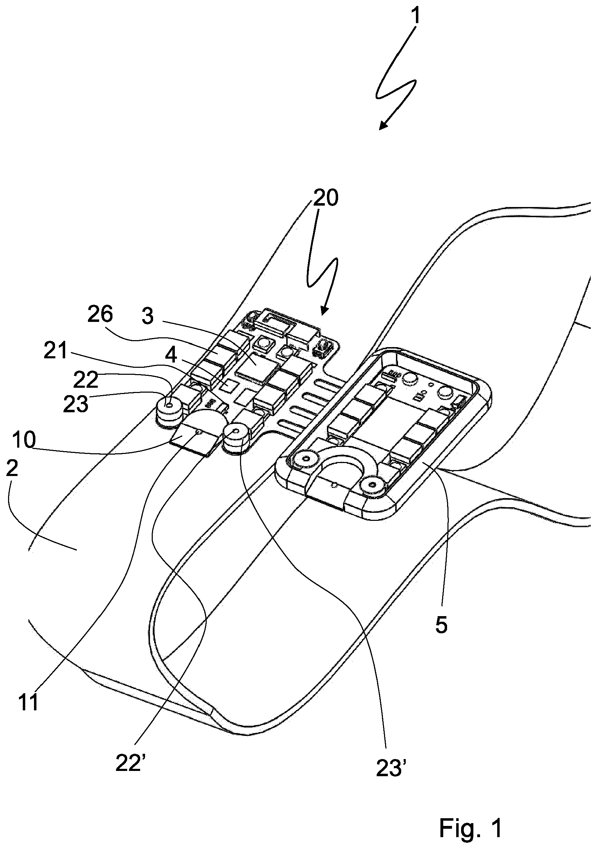

In Figur 1 ist die erfindungsgemäße Sensoreinheit 1 mit einer Sensorplatte 20 und einem Messmagneten 10 auf einer Materialschicht 2 dargestellt. Die Sensoreinheit 1 kann mit einer Abdeckung 5 abgedeckt werden, sodass die Elektronik der Sensoreinheit 1 vor äußeren Einflüssen geschützt wird.

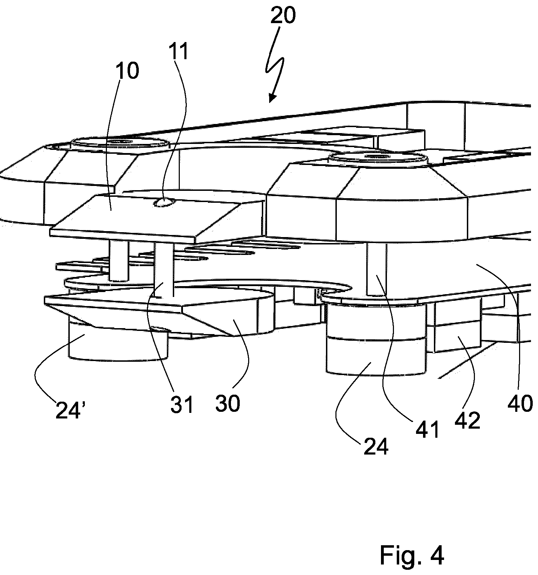

Sowohl der Messmagnet 10 als auch die Sensorplatte 20 sind mit entsprechenden Befestigungsmitteln an der Materialschicht 2 befestigt. Zu diesem Zweck weist einerseits der Messmagnet 10 eine Öffnung 11 auf, in welcher ein Zentrierstift 31 des Gegenstücks (siehe Figur 4) eingreift. Ebenso weisen die Positionsmagnete 23, 23' der Sensorplatte 20 Öffnungen 22, 22' auf, in welche Zentrierstifte 41, 41' der Gegenplatte 40 eingreifen, um die Sensoreinheit 1 an der Materialschicht 2 zu befestigen.

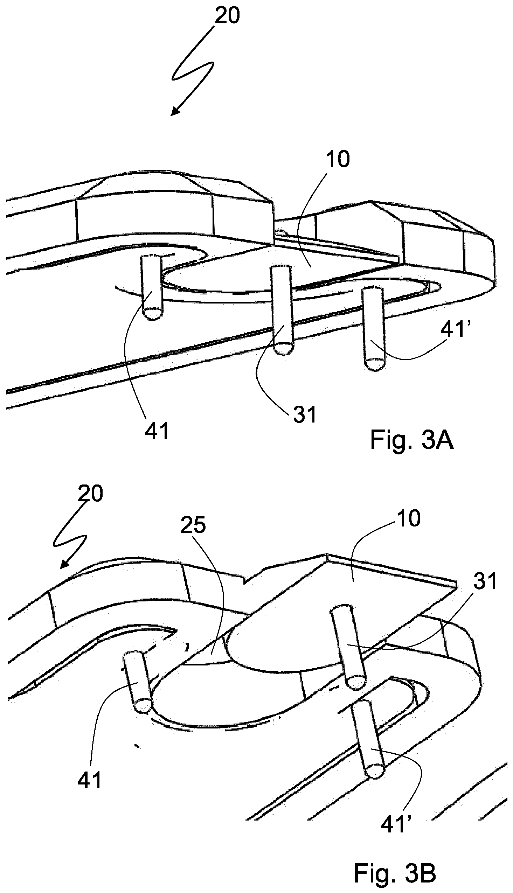

Die Zentrierstifte31, 41, 41', die insbesondere in Figur 4, aber auch in den Figuren 3a und 3b dargestellt sind, führen dazu, dass sowohl die Sensorplatte 20 als auch der Messmagnet 10 an einer festen Position an der Materialschicht 2 befestigt sind. Die Befestigung der Bestandteile der Sensoreinheit 1 an der Materialschicht 2 wird zusätzlich durch die magnetische Eigenschaft des Messmagneten 10 bzw. der Positionsmagnete 23, 23' und entsprechenden Gegenmagneten 24, 24', 30 unterstützt.

Auf der Sensorplatte 20 ist weiterhin eine Messeinrichtung 21 angeordnet, die zu beiden Positionsmagneten 23, 23' den gleichen Abstand aufweist. Die Messeinrichtung 21 ist derart eingerichtet, dass mit der Messeinrichtung 21 ein Abstand zu dem Messmagneten 10 erfassbar ist. Insbesondere ist ein Abstand des Messmagneten 10 senkrecht zu einer Verbindungslinie 50 der Positionsmagnete 23, 23' erfassbar, wodurch die erfindungsgemäße Sensoreinheit 1 auf unterschiedlichen Materialschichten 2 des gleichen Gewebetyps angebracht werden kann, ohne dass eine erneute Kalibration erforderlich werden würde.

Der Abstand zwischen dem Messmagneten 10 und der Messeinrichtung 21 verändert sich, wenn die Materialschicht 2 eine Dehnung erfährt. In diesem Fall bewegt sich der Messmagnet 10 aus der Ausnehmung 25 der Sensorplatte 20 in Richtung der Dehnung heraus. Handelt es sich bei der Materialschicht 2 beispielsweise um ein Fitnessband, so erfolgt eine Dehnung des Bandes abhängig von der von dem Anwender aufgebrachten Kraft. Folglich kann durch die Erfassung der Dehnung der Materialschicht 2 mithilfe der erfindungsgemäßen Sensoreinheit 1 dem Anwender ein Feedback darüber gegeben werden, wie stark das Fitnessband während einem Training gedehnt wurde, d.h. wie viel Kraft aufgewendet wurde.

Bei der Messeinrichtung 21 handelt es sich um einen Hallsensor, der eine Veränderung eines Spannungs- oder Stromwertes erfasst, wenn das Magnetfeld des Messmagneten 10 bewegt wird und damit eine veränderte Lorentzkraft auf den Hallsensor 21 ausgeübt wird. Aus diesen Werten, die von der Messeinrichtung 21 gemessen werden, kann ein Abstand der Messeinrichtung 21 zu dem Messmagneten 10 bestimmt und damit die Dehnung der Materialschicht 2 ermittelt werden. Die Dehnung der Materialschicht 2 gibt wiederum Aufschluss über die Kräfte, die auf die Materialschicht 2 wirken.

Die mit der Messeinrichtung 21 erfassten Daten werden in der gezeigten Ausführungsform an eine Übertragungseinrichtung 3 übermittelt, die wiederum die Daten über eine Funkverbindung an eine Auswerteeinheit, beispielsweise ein Smartphone, übermittelt. Auf dem Smartphone kann der Nutzer dann beispielswiese in Echtzeit die während dem Training aufgewandte Kraft einsehen und so das Training optimieren.

Die erfindungsgemäße Sensoreinheit 1 weist zudem einen Lage-, Temperatur-, und Beschleunigungssensor 4 auf, mit welchem zusätzlich zu der aufgewandten Kraft dem Anwender weitere Informationen zur Verfügung gestellt werden können. Insbesondere können mit Hilfe des Beschleunigungssensors 4 auch Rückschlüsse gezogen werden, welcher Art von Bewegung die erfindungsgemäße Sensoreinheit 1 zu einem bestimmten Zeitpunkt ausgesetzt ist. So unterscheiden sich beispielsweise die wirkenden Beschleunigungskräfte während dem Transport des Fitnessbandes in einer Tasche von denen während eines Trainings. Die Datenerfassung mit Hilfe der Messeinrichtung 21 erfolgt daher besonders bevorzugt nur bei solchen Bewegungszuständen, die auch eine Datenerfassung erfordern. So wird die Akkulaufzeit der erfindungsgemäßen Sensoreinheit 1 verlängert. Der Akku der erfindungsgemäßen Sensoreinheit 1 kann beispielsweise induktiv oder über einen lösbaren Kabelanschluss geladen werden.

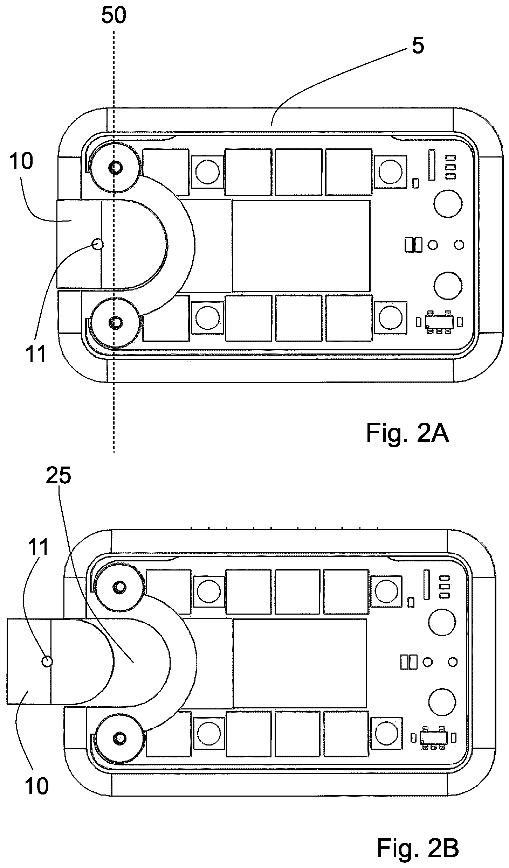

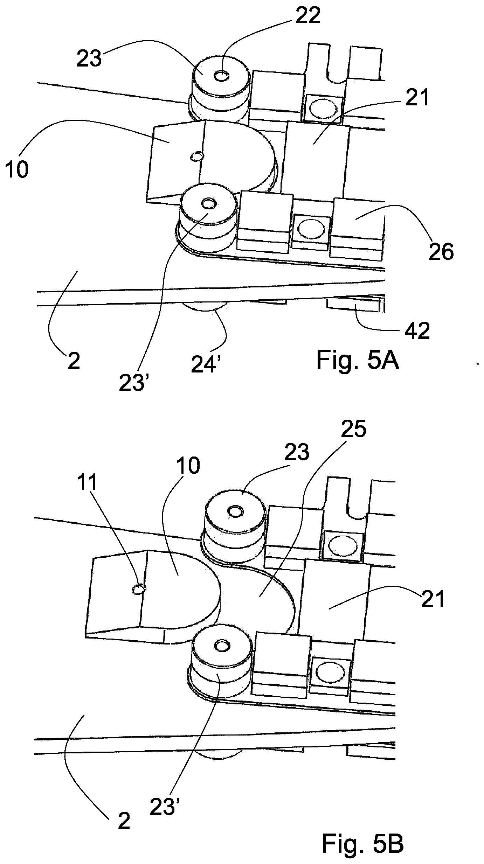

In den Figuren 2a und 2b ist eine Draufsicht auf die Abdeckung 5 der erfindungsgemäßen Sensoreinheit 1 dargestellt. Die Abdeckung 5 der erfindungsgemäßen Sensoreinheit 1 bildet im Wesentlichen die einzelnen Bestandteile der Sensorplatte 20 ab. Wird die Materialschicht 2 nicht gedehnt, wie in Figur 2a dargestellt, befindet sich der Messmagnet 10 vollständig in der Ausnehmung 25 der Sensorplatte 20. Sobald die Materialschicht 2 eine Dehnung erfährt, bewegt sich der Messmagnet 10 aus der Ausnehmung 25 der Sensorplatte 20 hinaus, wie in Figur 2b dargestellt. Der Effekt der Dehnung der Materialschicht 2 auf die Bewegung des Messmagneten 10 kann auch in den Figuren 3a und 3b sowie 5a und 5b nachvollzogen werden.

In den Figuren 3a und 3b sind zudem die Zentrierstifte 31, 41, 41' der Gegenplatte 40 und des Gegenstücks 30 dargestellt, die in die Öffnungen 11, 22, 22' des Messmagneten und der Sensorplatte eingreifen, um die Sensorplatte 20 und den Messmagneten 10 an der Materialschicht 2 an einer festgelegten Position zu befestigen. Die Zentrierstifte 31, 41, 41' sind dabei so dimensioniert, dass sie das Gewebe der Materialschicht 2 nicht beeinflussen, sondern in eine Gewebewabe der Materialschicht 2 eingreifen. So wird die Dehnbarkeit der Materialschicht 2 durch die Zentrierstifte 31, 41, 41' nicht beeinflusst.

In Figur 4 ist gezeigt, wie die Zentrierstifte 31, 41, 41' in die Öffnungen 11, 22, 22' eingreifen. Zwischen der Sensorplatte 20, dem Messmagneten 10, der Gegenplatte 40 und dem Gegenstück 30 wird die Materialschicht 2 angeordnet, wie in den Figuren 5a und 5b dargestellt.

Um die Sensorplatte 20 in ihren vollen Ausdehnung sicher an der Materialschicht 2 zu halten, sind außerdem weitere Haltemagnete 26 auf der Sensorplatte und Haltemagnete 42 auf der Gegenplatte vorgesehen, die miteinander in Wechselwirkung treten. Die Sensorplatte 20 ist zudem aus einem flexiblen Material gefertigt, sodass die Sensorplatte 20 einer Biegung der Materialschicht 2 folgt. Gleiches gilt für die Gegenplatte 40.

Die erfindungsgemäße Sensoreinheit hat in der gezeigten Ausführungsform insgesamt eine Ausdehnung von 48,5 mm x 30 mm x 4,75 mm (Länge x Breite x Höhe). Die erfindungsgemäße Sensoreinheit 1 ist damit kompakt genug, um die Bewegung der Materialschicht 2, z.B. die Anwendung eines Fitnessbandes oder anderer Sportgeräte nicht zu beeinträchtigen. Das Gewicht der Sensoreinheit 1 ist entsprechend gering.

### Bezugszeichenliste

- 1: Sensoreinheit
- 2: Materialschicht
- 3: Übertragungseinheit
- 4: Lage-, Temperatur- und Beschleunigungssensor
- 5: Abdeckung
- 10: Messmagnet
- 11: Öffnung des Messmagneten
- 20: Sensorplatte
- 21: Messeinrichtung
- 22, 22': Öffnungen der Sensorplatte
- 23, 23': Positionsmagnete
- 24, 24': Gegenmagnete zu Positionsmagneten
- 25: Ausnehmung
- 26: Haltemagnete auf Sensorplatte
- 30: Gegenstück
- 31: Zentrierstift für Gegenstück
- 40: Gegenplatte
- 41, 41': Zentrierstifte für Gegenplatte
- 42: Haltemagnete auf Gegenplatte
- 50: Verbindungslinie

## Patentansprüche

1. Sensoreinheit (1) zur Erfassung der Dehnung einer flexiblen, bahn- oder bandförmigen Materialschicht (2), wobei die Sensoreinheit (1)
- einen Messmagneten (10) aufweist, wobei der Messmagnet (10) ein Befestigungsmittel (11) aufweist, mit welchem der Messmagnet (10) an der Materialschicht (2) an einer festgelegten Position befestigbar ist, und
- eine Sensorplatte (20) aufweist, wobei die Sensorplatte (20) eine Messeinrichtung (21) zur Erfassung eines die magnetische Flussdichte eines Magnetfeldes des Messmagneten (10) repräsentierenden Parameters aufweist, wobei die Sensorplatte (20) weiterhin ein Befestigungsmittel (22) aufweist, mit welchem die Sensorplatte (20) an der Materialschicht (2) an einer festgelegten Position befestigbar ist, und
- eine Auswerteeinheit zur Ermittlung der Dehnung der Materialschicht (2) auf Basis des von der Sensorplatte (20) erfassten Parameters,
wobei die Messeinrichtung (21) und der Messmagnet (10) in einem Abstand zueinander angeordnet sind, in dem die magnetische Flussdichte des Magnetfeldes des Messmagneten (10) durch die Messeinrichtung (21) erfassbar ist, wobei die Messeinrichtung (21) und der Messmagnet (10) in einer Materialschichtebene durch die Dehnung der Materialschicht (2) in Richtung der Bahn oder des Bandes relativ zueinander bewegbar sind, so dass ein Abstand des Messmagneten (10) zu der Messeinrichtung (21) von der Dehnung der Materialschicht (2) in Richtung der Bahn oder des Bandes abhängt, wobei der von der Messeinrichtung erfasste Parameter von dem Abstand der Messeinrichtung (21) und dem Messmagneten (10) und damit von der Dehnung der Materialschicht (2) in Richtung der Bahn oder des Bandes abhängt.

2. Sensoreinheit (1) nach einem der vorhergehenden Ansprüche, wobei es sich bei der Materialschicht (2) um eine Schicht handelt, die aus einem Material besteht, das unter dehnbaren Kunststoffbahnen, Folien, Textilgeweben und Kombinationen hiervon ausgewählt ist, wobei es sich bei der Materialschicht (2) vorzugsweise um ein dehnbares Fitnessband, einen Stoffabschnitt einer Sportbekleidung, eine Schicht einer orthopädischen Bandage oder eines medizinischen Verbandes oder um einen Bezug eines Sportgeräts handelt.

3. Sensoreinheit (1) nach einem der vorhergehenden Ansprüche, wobei die Befestigungsmittel (11, 22) eine punktuelle Befestigung des Messmagneten (10) und der Sensorplatte (20) an der Materialschicht (2) an Befestigungspunkten bewirken, sodass die Materialschicht (2) außerhalb der Befestigungspunkte während einer Dehnung frei gleiten kann, wobei vorzugsweise die Dehnung der Materialschicht (2) durch die Befestigungsmittel (11, 22) nicht beeinflusst wird.

4. Sensoreinheit (1) nach einem der vorhergehenden Ansprüche, wobei die Messeinrichtung (21) ein Hall-Sensor ist, und wobei der erfasste Parameter eine Spannung oder ein Strom ist.

5. Sensoreinheit (1) nach einem der vorhergehenden Ansprüche, wobei die Befestigungsmittel (22) der Sensorplatte (20) zwei auf der Sensorplatte (20) angeordnete Positionsmagnete (23, 23') und zwei korrespondierende Gegenmagnete (24, 24') aufweisen, wobei die Messeinrichtung (21) derart angeordnet ist, dass die Messeinrichtung (21) zu jedem der Positionsmagnete (23, 23') den gleichen Abstand aufweist, wobei der von der Messeinrichtung (21) erfasste Parameter von einem Abstand des Messmagneten (10) senkrecht zu einer Verbindungslinie (30) der Positionsmagnete (23, 23') abhängt.

6. Sensoreinheit (1) nach einem der vorhergehenden Ansprüche, wobei wenigstens der Messmagnet (10) und vorzugsweise auch die Positionsmagnete (23, 23') einen kreis- oder ringförmigen Querschnitt aufweisen, wobei besonders bevorzugt die Befestigungsmittel (11, 22) im Mittelpunkt des kreis- oder ringförmigen Querschnitts angeordnet sind.

7. Sensoreinheit (1) nach einem der vorhergehenden Ansprüche, wobei die Sensorplatte (20) an einer dem Messmagneten (10) zugewandten Seite eine Ausnehmung (25) aufweist, wobei der Messmagnet (10) zumindest teilweise in der Ausnehmung (25) anordenbar ist.

8. Sensoreinheit (1) nach einem der vorhergehenden Ansprüche, wobei die Sensorplatte (20) aus einem flexiblen, nicht dehnbaren Material gefertigt ist, sodass sich die Sensorplatte (20) der Biegung aber nicht der Dehnung der Materialschicht (2) anpasst.

9. Sensoreinheit (1) nach einem der vorhergehenden Ansprüche, wobei eine Gegenplatte (40) zur der Sensorplatte (20) und ein Gegenstück (30) zu dem Messmagneten (10) vorgesehen ist, wobei die Materialschicht (2) zwischen der Sensorplatte (20) und der Gegenplatte (40) und dem Messmagneten (10) und dem Gegenstück (30) anordenbar ist, wobei die Gegenplatte (40) und das Gegenstück (30) zu den Befestigungsmitteln (11, 22) der Sensorplatte (20) und des Messmagneten (10) korrespondiere Befestigungsmittel (31, 41) aufweisen, sodass die Gegenplatte (40) mit der Sensorplatte (20) und das Gegenstück (30) mit dem Messmagneten (10), insbesondere mittels einer Steckverbindung, verbindbar sind, wobei vorzugsweise die Befestigungsmittel (31, 41) der Gegenplatte (40) und des Gegenstücks (30) magnetisch ausgeführt sind, sodass die Gegenplatte (40) und das Gegenstück (30) zusätzlich durch eine magnetische Verbindung an der Sensorplatte (20) und dem Messmagneten (10) gehalten werden.

10. Sensoreinheit (1) nach dem vorhergehenden Anspruch, wobei zusätzlich zu den Befestigungsmitteln (11, 22, 31, 41) Haltemagnete (26) auf der Sensorplatte (20) vorgesehen sind, wobei die Haltemagnete (26) mit gegenüberliegenden, auf der Gegenplatte (40) angeordneten Haltemagneten (42) in Wechselwirkung treten.

11. Sensoreinheit (1) nach einem der vorhergehenden Ansprüche, wobei die Sensoreinheit (1) weiterhin eine Übertragungseinheit (3) aufweist, die so eingerichtet ist, dass sie während des bestimmungsgemäßen Gebrauchs der Sensoreinheit (1) zur vorzugsweise kabellosen Übertragung eines Signals, das dem von der Messeinrichtung (21) erfassten Parameter entspricht, an eine Auswerteeinheit geeignet ist.

12. Sensoreinheit (1) nach dem vorhergehenden Anspruch, wobei die Auswerteeinheit zur Ermittlung der für die Dehnung aufgewandten Kraft aus dem übertragenen Signal eingerichtet ist.

13. Sensoreinheit (1) nach einem der vorhergehenden Ansprüche, wobei die Sensoreinheit (1) weiterhin einen Lage-, Temperatur und/oder Beschleunigungssensor (4) aufweist.

14. Sensoreinheit (1) nach einem der vorhergehenden Ansprüche, wobei die Sensoreinheit (1) weiterhin Bedienelemente zum Ein- und Ausschalten der Messeinrichtung (21) aufweist.

15. Verfahren zur Erfassung der Dehnung einer flexiblen, bahn- oder bandförmigen Materialschicht (2) mit den Schritten:
a. Befestigen einer Sensorplatte (20) mit einer Messeinrichtung (21) an der Materialschicht (2),
b. Befestigen eines Messmagneten (10) an der Materialschicht (2), wobei die Messeinrichtung (21) und der Messmagnet (10) in einer Materialebene in Richtung der Dehnung der Materialschicht (2) in Richtung der Bahn oder des Bandes relativ zueinander bewegbar sind, sodass ein Abstand des Messmagneten (10) zu der Messeinrichtung (21) von der Dehnung der Materialschicht (2) in Richtung der Bahn oder des Bandes abhängt,
c. Erfassen eines die magnetische Flussdichte eines Magnetfeldes des Messmagneten (10) repräsentierenden Parameters in Abhängigkeit von dem Abstand des Messmagneten (10) zu der Messeinrichtung (21),
d. Ermitteln der Dehnung der Materialschicht (2) in Richtung der Bahn oder des Bandes auf Basis des in Schritt c. erfassten Parameters.

## Claims

1. Sensor unit (1) for detecting the elongation of a flexible, web- or strip-shaped material layer (2), wherein the sensor unit (1) comprises
- a measuring magnet (10), wherein the measuring magnet (10) has a fastening means (11) with which the measuring magnet (10) can be fastened to the material layer (2) at a predetermined position, and
- a sensor plate (20), wherein the sensor plate (20) has a measuring device (21) for detecting a parameter representing the magnetic flux density of a magnetic field of the measuring magnet (10), wherein the sensor plate (20) further has a fastening means (22) with which the sensor plate (20) can be fastened to the material layer (2) at a predetermined position, and
- an evaluation unit for determining the elongation of the material layer (2) on the basis of the parameter detected by the sensor plate (20),
wherein the measuring device (21) and the measuring magnet (10) are arranged at a distance from each other at which the magnetic flux density of the magnetic field of the measuring magnet (10) can be detected by the measuring device (21), wherein the measuring device (21) and the measuring magnet (10) are movable relative to each other in a material layer plane due to the elongation of the material layer (2) in the direction of the web or strip, so that a distance between the measuring magnet (10) and the measuring device (21) depends on the elongation of the material layer (2) in the direction of the web or strip, wherein the parameter detected by the measuring device depends on the distance between the measuring device (21) and the measuring magnet (10) and thus on the elongation of the material layer (2) in the direction of the web or strip.

2. Sensor unit (1) according to one of the preceding claims, wherein the material layer (2) is a layer consisting of a material which is selected from stretchable plastic films, foils, textile fabrics, and combinations thereof, wherein the material layer (2) is preferably an expandable fitness band, a section of fabric of sportswear, a layer of an orthopedic bandage or a medical dressing, or a cover of a sports device.

3. Sensor unit (1) according to one of the preceding claims, wherein the fastening means (11, 22) cause the measuring magnet (10) and the sensor plate (20) to be fastened at specific points on the material layer (2) at fastening points so that the material layer (2) can slide freely outside the fastening points during elongation, wherein preferably the elongation of the material layer (2) is not influenced by the fastening means (11, 22).

4. Sensor unit (1) according to one of the preceding claims, wherein the measuring device (21) is a Hall sensor and wherein the parameter detected is a voltage or a current.

5. Sensor unit (1) according to one of the preceding claims, wherein the fastening means (22) of the sensor plate (20) have two position magnets (23, 23') arranged on the sensor plate (20) and two corresponding counter magnets (24, 24'), wherein the measuring device (21) is arranged such that the measuring device (21) has the same distance from each of the position magnets (23, 23'), wherein the parameter detected by the measuring device (21) depends on a distance of the measuring magnet (10) perpendicular to a connecting line (30) of the position magnets (23, 23').

6. Sensor unit (1) according to one of the preceding claims, wherein at least the measuring magnet (10) and preferably also the position magnets (23, 23') have a circular or ring-shaped cross-section, wherein it is particularly preferred that the fastening means (11, 22) are arranged in the center of the circular or ring-shaped cross-section.

7. Sensor unit (1) according to one of the preceding claims, wherein the sensor plate (20) has a recess (25) on a side facing the measuring magnet (10), wherein the measuring magnet (10) can be arranged at least partially in the recess (25).

8. Sensor unit (1) according to one of the preceding claims, wherein the sensor plate (20) is made of a flexible, non-stretchable material so that the sensor plate (20) adapts to the bending but not to the stretching of the material layer (2).

9. Sensor unit (1) according to one of the preceding claims, wherein a counterplate (40) is provided for the sensor plate (20) and a counterpart (30) is provided for the measuring magnet (10), wherein the material layer (2) can be arranged between the sensor plate (20) and the counterplate (40) and the measuring magnet (10) and the counterpart (30), wherein the counterplate (40) and the counterpart (30) have fastening means (31, 41) corresponding to the fastening means (11, 22) of the sensor plate (20) and the measuring magnet (10), so that the counter plate (40) can be connected to the sensor plate (20) and the counterpart (30) to the measuring magnet (10), in particular by means of a plug connection, wherein preferably the fastening means (31, 41) of the counterplate (40) and the counterpart (30) are magnetically designed so that the counterplate (40) and the counterpart (30) are additionally held on the sensor plate (20) and the measuring magnet (10) by a magnetic connection.

10. Sensor unit (1) according to the preceding claim, wherein, in addition to the fastening means (11, 22, 31, 41), holding magnets (26) are provided on the sensor plate (20), wherein the holding magnets (26) interact with opposing holding magnets (42) arranged on the counterplate (40).

11. Sensor unit (1) according to one of the preceding claims, wherein the sensor unit (1) further comprises a transmission unit (3) which is designed such that, during the intended use of the sensor unit (1), it is suitable for the preferably wireless transmission of a signal corresponding to the parameter detected by the measuring device (21) to an evaluation unit.

12. Sensor unit (1) according to the preceding claim, wherein the evaluation unit is designed to determine the required force for the elongation from the transmitted signal.

13. Sensor unit (1) according to one of the preceding claims, wherein the sensor unit (1) further comprises a position, temperature and/or an acceleration sensor (4).

14. Sensor unit (1) according to one of the preceding claims, wherein the sensor unit (1) further comprises operating elements for switching the measuring device (21) on and off.

15. Method for detecting the elongation of a flexible, web- or strip-shaped material layer (2), comprising the steps:
a. attaching a sensor plate (20) with a measuring device (21) to the material layer (2),
b. attaching a measuring magnet (10) to the material layer (2), wherein the measuring device (21) and the measuring magnet (10) are movable relative to each other in a material layer plane in the direction of the elongation of the material layer (2) in the direction of the web or strip, so that a distance between the measuring magnet (10) and the measuring device (21) depends on the elongation of the material layer (2) in the direction of the web or strip,
c. detecting a parameter representing the magnetic flux density of a magnetic field of the measuring magnet (10) as a function of the distance between the measuring magnet (10) and the measuring device (21),
d. determining the elongation of the material layer (2) in the direction of the web or strip on the basis of the parameter detected in step c.

## Revendications

1. Unité de capteur (1) pour saisir une élongation d'une couche de matière souple (2) en forme de lé ou de bande, l'unité de capteur (1)
- comprenant un aimant de mesure (10), l'aimant de mesure (10) comprenant un moyen de fixation (11) à l'aide duquel l'aimant de mesure (10) peut être fixé sur la couche de matière (2) dans une position déterminée, et
- comprenant une plaque de capteur (20), la plaque de capteur (20) comportant un dispositif de mesure (21) pour saisir un paramètre représentant la densité de flux magnétique d'un champ magnétique de l'aimant de mesure (10), la plaque de capteur (20) comprenant en outre un moyen de fixation (22) à l'aide duquel la plaque de capteur (20) peut être fixée sur la couche de matière (2) dans une position déterminée, et
- comprenant une unité d'évaluation pour déterminer l'élongation de la couche de matière (2) sur la base du paramètre saisi par la plaque de capteur (20),
le dispositif de mesure (21) et l'aimant de mesure (10) étant disposés à une distance l'un de l'autre à laquelle la densité de flux magnétique du champ magnétique de l'aimant de mesure (10) peut être saisie par le dispositif de mesure (21), le dispositif de mesure (21) et l'aimant de mesure (10) pouvant être déplacés l'un par rapport à l'autre dans un plan de couche de matière par l'élongation de la couche de matière (2) dans la direction de la lé ou de la bande, si bien qu'une distance de l'aimant de mesure (10) du dispositif de mesure (21) dépende de l'élongation de la couche de matière (2) dans la direction de la lé ou de la bande, le paramètre saisi par le dispositif de mesure dépendant de la distance entre le dispositif de mesure (21) et l'aimant de mesure (10) et ainsi de l'élongation de la couche de matière (2) dans la direction de la lé ou de la bande.

2. Unité de capteur (1) selon l'une des revendications précédentes, la couche de matière (2) étant une couche consistant en une matière choisie parmi des lés de matière synthétique souple, des films, des tissus textiles et des combinaisons de ceux-ci, la couche de matière (2) étant de préférence une bande de fitness souple, une partie de tissu d'un vêtement de sport, une couche d'un bandage orthopédique ou d'un bandage médical ou d'une housse d'un appareil de sport.

3. Unité de capteur (1) selon l'une des revendications précédentes, les moyens de fixation (11,22) réalisant une fixation ponctuelle de l'aimant de mesure (10) et de la plaque de capteur (20) sur la couche de matière (2) à des points de fixation, si bien que la couche de matière (2) puisse glisser librement en dehors des points de fixation lors d'une élongation, de préférence, l'élongation de la couche de matière (2) n'étant pas influencée par les moyens de fixation (11, 22).

4. Unité de capteur (1) selon l'une des revendications précédentes, le dispositif de mesure (21) étant un capteur Hall et le paramètre saisi étant une tension ou un courant.

5. Unité de capteur (1) selon l'une des revendications précédentes, les moyens de fixation (22) de la plaque de capteur (20) comprenant deux aimants de position (23, 23') disposés sur la plaque de capteur (20) et deux contre-aimants correspondants (24, 24'), le dispositif de mesure (21) étant disposé de façon que le dispositif de mesure (21) soit à la même distance de chacun des aimants de position (23, 23'), le paramètre saisi par le dispositif de mesure (21) dépendant d'une distance de l'aimant de mesure (10) perpendiculaire à une ligne de liaison (30) des aimants de position (23, 23').

6. Unité de capteur (1) selon l'une des revendications précédentes, au moins l'aimant de mesure (10) et de préférence aussi les aimants de position (23, 23') ayant une section transversale circulaire ou annulaire, de façon particulièrement préférée, les moyens de fixation (11, 22) étant disposés au centre de la section transversale circulaire ou annulaire.

7. Unité de capteur (1) selon l'une des revendications précédentes, la plaque de capteur (20) comprenant un évidement (25) sur un côté orienté vers l'aimant de mesure (10), l'aimant de mesure (10) pouvant être disposé au moins partiellement dans l'évidement (25).

8. Unité de capteur (1) selon l'une des revendications précédentes, la plaque de capteur (20) étant réalisée en une matière flexible non extensible, si bien que la plaque de capteur s'adapte à la flexion mais non pas à l'élongation de la couche de matière (2).

9. Unité de capteur (1) selon l'une des revendications précédentes, une contre-plaque (40) pour la plaque de capteur (20 et une contre-pièce (30) pour l'aimant de mesure (10) étant prévues, la couche de matière (2) pouvant être disposée entre la plaque de capteur (20) et la contre-plaque (40) et entre l'aimant de mesure (10) et la contre-pièce (30), la contre-plaque (40) et la contre-pièce (30) comprenant des moyens de fixation (31, 41) correspondant aux moyens de fixation (11, 22) de la plaque de capteur (20) et de l'aimant de mesure (10), si bien que la contre-plaque (40) puisse être reliée à la plaque de capteur (20) et la contre-pièce (30) à l'aimant de mesure (10), notamment à l'aide d'une connexion enfichable, les moyens de fixation (31, 41) de la contre-plaque (40) et de la contre-pièce (30) étant magnétiques, si bien que la contre-plaque (40) et la contre-pièce (30) soient maintenues sur la plaque de capteur (20) et l'aimant de mesure (10) de façon supplémentaire par une liaison magnétique.

10. Unité de capteur (1) selon la revendication précédente, en plus des moyens de fixation (11, 22, 31, 41), des aimants de maintien (26) étant prévus sur la plaque de capteur (20), les aimants de maintien (26) étant en interaction avec des aimants de maintien (42) disposés sur la contre-plaque (40) opposée.

11. Unité de capteur (1) selon l'une des revendications précédentes, l'unité de capteur (1) comprenant en outre une unité de transmission (3) qui est agencée de façon qu'elle soit capable de transmettre à une unité d'exploitation, de préférence sans câble, un signal qui correspond au paramètre saisi par le dispositif de mesure (21).

12. Unité de capteur (1) selon la revendication précédente, l'unité d'exploitation étant agencée pour déterminer, à partir du signal transmis, la force appliquée pour l'élongation.

13. Unité de capteur (1) selon l'une des revendications précédentes, l'unité de capteur (1) comprenant en outre un capteur de position, de température et/ou d'accélération (4).

14. Unité de capteur (1) selon l'une des revendications précédentes, l'unité de capteur (1) comprenant en outre des éléments de commande pour allumer et arrêter le dispositif de mesure (21).

15. Procédé de saisie d'une élongation d'une couche de matière souple (2) en forme de lé ou de bande avec les étapes :
a. fixer sur la couche de matière (2) une plaque de capteur (20) avec un dispositif de mesure (21),
b. fixer un aimant de mesure (10) sur la couche de matière (2), le dispositif de mesure (21) et l'aimant de mesure (10) pouvant être déplacés l'un par rapport à l'autre dans un plan de matière dans la direction de l'élongation de la couche de matière (2), si bien qu'une distance de l'aimant de mesure (10) du dispositif de mesure (21) dépende de l'élongation de la couche de matière (2) dans la direction de la lé ou de la bande,
c. saisir un paramètre représentant la densité de flux magnétique d'un champ magnétique de l'aimant de mesure (10) en fonction de la distance entre l'aimant de mesure (10) et le dispositif de mesure (21),
d. déterminer l'élongation de la couche de matière (2) dans la direction du lé ou de la bande sur la base du paramètre saisi à l'étape c.
